# EUROPÄISCHE PATENTANMELDUNG

(11) **EP 4 834 856 A1**
(43) Veröffentlichungstag der Anmeldung: **04.11.2026**
(21) Anmeldenummer: 25173625.2
(22) Anmeldetag: 30.04.2025
(51) Int. Cl.: C03C 3/091, C03C 11/00, C03C 15/00, C03C 17/06, C03C 17/36, C03C 23/00

(54) **FLACHGLAS MIT VERBESSERTEN DIELEKTRISCHEN EIGENSCHAFTEN UND VERBESSERTER PROZESSIERBARKEIT**

(71) Anmelder: SCHOTT Technical Glass Solutions GmbH, 07745 Jena (DE); SCHOTT AG, 55122 Mainz (DE)
(72) Erfinder: MAX, Johannes, 07745 Jena (DE); WIESEKE, Hubert, 07745 Jena (DE); WAGNER, Fabian, 55122 Mainz (DE); DREISOW, Felix, 07745 Jena (DE); STORCH, Christine, 07745 Jena (DE); HOCHREIN, Oliver, 55122 Mainz (DE); LAUTENSCHLÄGER, Gerhard, 07749 Jena (DE); WIELIGMANN, Karin, 07745 Jena (DE); GÖNÜLLÜ, Yakup, 55122 Mainz (DE); LETZ, Martin, 55122 Mainz (DE)
(74) Vertreter: Schott Corporate IP

(57) **Zusammenfassung**

Die Erfindung betrifft ein Flachglas mit geringen Verlustfaktoren und einer geringen Dielektrizitätskonstante, wobei das Flachglas Oxide von Netzwerkbildern in einem Gehalt von höchstens 99 Mol-% umfasst, als Netzwerkbildner SiO₂ und B₂O₃ enthält und das Gewichtsverhältnis Verhältnis von SiO₂ zu B₂O₃ höchstens 3,5 beträgt, der Gehalt an Alkaimetalloxiden im Flachglas höchstens 4 Mol-% beträgt und das Flachglas eine Nanostruktur umfassend zumindest eine SiO₂-reiche Phase und B₂O₃-reiche Phasen aufweist. Des weiteren betrifft die Erfindung die Verwendung eines entsprechenden Flachglases bei der Herstellung eines elektronischen Bauteils, insbesondere eines Interposers, soiwe ein Verfahren zur Herstellung eines strukturierten, metallisierten Flachglases.

## Beschreibung

Die Erfindung betrifft ein Flachglas, das besonders zur Herstellung eines elektronischen Bauteils geeignet ist, sowie ein Verfahren zur Herstellung eines strukturierten, metallisch beschichteten Flachglases. Insbesondere betrifft die Erfindung ein Flachglas, welches zur Herstellung elektronischer Bauteile mit durch das Glas durchgehenden Durchkontaktierungen (TGV) geeignet ist. Des Weiteren betrifft die Erfindung die Verwendung des entsprechenden Flachglases bei der Herstellung eines elektronischen Bauteils sowie ein Verfahren zur Herstellung eines strukturierten, mit einer metallischen Beschichtung versehenen Flachglases.

### Stand der Technik

Es besteht zunehmend Bedarf an Materialien, die sich als Substrate für den Aufbau von elektronischen Bauteilen bzw. deren Komponenten für die Verbindungstechnik eignen. Bei diesen Bauteilen kann es sich beispielsweise um sog. "packaging substrates" oder Interposern handeln.

Derzeit werden beispielsweise als Interposer in der Halbleitertechnologie Silicium-Bauteile verwendet. Dieser Prozess ist sehr gut beherrscht, jedoch weist Silicium eine sehr hohe Dielektrizitätskonstante von 11,68 auf (sowie - je nach genauer Ausbildung des Materials - auch sehr hohe dielektrische Verluste), was die Verwendung von Silicium in Hochfrequenzanwendungen limitiert.

Auch werden zunehmend Kunststoffe als Substrate und/oder Interposer verwendet. Diese Materialien weisen jedoch ungünstige mechanische, beispielsweise thermomechanische Eigenschaften, wie einen hohen Wärmeausdehnungskoeffizienten, auf. Auch sind diese Materialien leicht verformbar, weisen also nicht die für die geforderten hohen Genauigketen in der Halbleiter- und Elektronikindustrie geforderten Dimensionsstabilitäten auf.

Weiterhin finden auch Keramiken Anwendung. Jedoch sind Keramiken nur begrenzt homogen und weisen insbesondere ein heterogenes Gefüge auf. Insbesondere sind Keramiken zumeist porös ausgebildet. Dies kann zu Problemen mit dem Ausgasen von Poren führen, was insbesondere bei den Metallisierungsprozessen von Nachteil ist. Auch sind die Dielektrizitätskonstanten üblicher Keramiken in der Regel zu hoch. Keramiken sind wegen ihrer teilweise im Vergleich zu Gläsern deutlich höheren thermischen Leitfähigkeit oft in Leistungsanwendungen zu finden.

Auch Gläser finden bereits derzeit schon Anwendungen. Beispielsweise ist die Verwendung von alkalifreien Erdalkali-Aluminosilikatglas, oder dem Glas "EAGLE" der Firma Corning bekannt.

Aus der EP 3 569 578 A1 sind Gläser mit einem geringen Verlustmodul und einer Dielektrizitätskonstante bekannt. Diese Gläser weisen eine Dielektrizitätskonstante ε von kleiner 4,3 und einen dielektrischen Verlustfaktor tan δ von 0,004 oder weniger bei 5 GHz auf und eignen sich insbesondere für elektronische Bauteile wie Antennen, beispielsweise eine Patch-Antenne oder ein Array von Antennen, für sog. "Antenna in Package" (AIP)- Konzepte, Packages in Radarsensoren oder ein Phasenschieberelement, insbesondere ein Flüssigkristall-basiertes Phasenschieberelement. Weitere mögliche Anwendungen, bei denen sehr hohe Datenraten innerhalb des Packages realisiert werden müssen wie beispielsweise im sog. high performance computing oder in Zentralrechnern in Automobilen dar.

Diese können über einen hohen Netzwerkbildner (Si, B, Al), bei gleichzeitigem niedrigen Alkaligehalt (einwertige Ionen) im Glas eingestellt werden.

Zur Herstellung von Glas-Substraten mit Durchkontaktierungen, auch als TGV-Substrate bezeichnet, sind neben den dielektrischen Eigenschaften der Materialien die Prozessierbarkeit der eingesetzten Gläser beim Strukturieren relevant. TGV-Substrate weisen eine große Anzahl von Löchern in Form von Kanälen auf, die für eine vertikale elektrische Verbindung durch das Substrat sorgen. Die im Substrat enthaltenen Durchkontaktierungen müssen hierbei eine definierte Geometrie und Oberflächenbeschaffenheit der Wandungen aufweisen. Zur Herstellung der entsprechenden Glas-Interposer bzw. TGV-Substrate durchläuft das zunächst nicht strukturierte Flachglas nacheinander folgende Prozess-Schritte: 1) Laserstrukturierung 2) Ätzen 3) Metallisieren.

Ein geeignetes Substratmaterial zur Herstellung von TGV-Substraten, beispielsweise in Form eines Flachglases, muss daher zusätzlich zu den oben beschriebenen dielektrischen Eigenschaften auch eine gute Strukturierbarkeit aufweisen. Diese äußert sich insbesondere in einer guten Ätzbarkeit des Substratmaterials bzw. des Flachglases. Unter einer guten Ätzbarkeit wird insbesondere verstanden, dass der Ätzprozess mit hohen Ätzraten und möglichst ohne Niederschlagsbildung durch die ausgelösten Glasbestandteile erfolgt. Des Weiteren müssen die Wandungen der mittels Ätzprozess erhaltenen Strukturen so beschaffen sein, dass eine gute Metallisierbarkeit gewährleistet ist. Unter einer guten Metallisierbarkeit wird insbesondere verstanden, dass sich zumindest in Teilbereichen des Glases in einem Metallabscheidungsprozess eine metallische Beschichtung gezielt abscheiden lässt und die abgeschiedene Beschichtung an der Glasoberfläche anhaftet.

Die Eignung des eingesetzten Glases misst sich neben den dielektrischen Eigenschaften somit an der Breite des erlaubten Prozessfensters und der darin erreichten Präzision bei der Erstellung der TGV. Anderes ausgedrückt: Ein geeignetes Glas erlaubt über ein breites Prozessfenster genau einstellbare TGV.

Die derzeit im Stand der Technik beschriebenen Gläser, die sich aufgrund ihrer dielektrischen Eigenschaften prinzipiell zur Verwendung als Substratmaterialien in Hochfrequenzanwendungen eignen, weisen geringe Alkaligehalte auf. Dies führt jedoch zu einer schlechteren Ätzbarkeit. Dies kann die Ätzrate als auch eine Niederschlagsbildung bei den Ätzprozessen betreffen. Zudem sind die bisher bekannten Gläser oft nur in schmalen Prozessfenstern metallisierbar.

Es besteht daher der Bedarf an Substratmaterialien bzw. Flachgläsern, die sich sowohl aufgrund ihrer guten dielektrischen Eigenschaften als auch in Hinblick auf ihre Prozessierbarkeit zur Herstellung von elektronischen Bauteilen, insbesondere zur Herstellung von durchkontaktierten Glas-Interposern (TGV-Substraten) eignen.

### Aufgabe der Erfindung

Es ist eine Aufgabe der Erfindung, ein Flachglas bereitzustellen, welches sowohl gute dielektrische Eigenschaften als auch eine gute Prozessierbarkeit aufweisen und sich somit zur Herstellung von elektronischen Bauteilen wie Interposern, insbesondere TGV-Interposern eignen. Eine weitere Aufgabe liegt in der Bereitstellung eines strukturierten Flachglases sowie der Verwendung des Flachglases in einem elektronischen Bauteil, insbesondere in einem TGV-Interposer.

### Beschreibung der Erfindung

Die Aufgabe der Erfindung wird bereits durch den Gegenstand des unabhängigen Anspruchs 1 gelöst. Spezielle, vorteilhafte und bevorzugte Ausgestaltungen finden sich in den abhängigen Ansprüchen.

Die Erfindung betrifft ein Flachgas. Unter einem Flachglas wird im Sinne der Offenbarung ein Glaskörper verstanden, dessen geometrische Abmessung in einer Raumrichtung mindestens eine Größenordnung geringer ist als in den beiden anderen Raumrichtungen. Vereinfacht gesprochen ist also die Dicke des Glaskörpers also mindestens eine Größenordnung geringer als dessen Länge und Breite. Flachgläser können beispielsweise bandförmig ausgestaltet sein, sodass also ihre Länge nochmals deutlich größer ist als ihre Breite, oder Länge und Breite können in etwa dieselbe Größenordnung aufweisen, sodass das Flachglas mithin als Scheibe vorliegt.

Insbesondere wird unter einem Flachglas ein Glas verstanden, welches aus dem Herstellungsprozess selbst bereits als scheiben- oder bandförmig ausgebildeter Körper erhalten wird.

Das Flachglas weist zwei gegenüberliegende Seitenflächen, zwei oberflächennahe Bereiche sowie einen Bulkbereich auf. Unter einem oberflächennahen Bereich wird im Sinne der Offenbarung insbesondere der Bereich des Glases von einer Seitenfläche bis zu einer Tiefe von 100 nm verstanden. Der Bulkbereich bildet den Mittenbereich des Flachglases.

Das Flachglas umfasst Oxide von Netzwerkbildnern in einem Gehalt von höchstens 99 Mol-% sowie einen Gehalt an Alkalimetalloxiden von höchstens 4 Mol-%, bevorzugt höchstens 3 Mol-%. Gemäß einer Ausführungsform beträgt der Gehalt an Oxiden von Netzwerkbildnern, insbesondere der Gesamtgehalt von SiO₂ und B₂O₃, 85 bis 99 Mol-%, bevorzugt 92 bis 99 Mol-%, besonders bevorzugt 95 bis 99 Mol.-%.

Netzwerkbildner werden hierbei im Sinne von Zachariasen verstanden, umfassen also Kationen, welche überwiegend die Koordinationszahl 3 oder 4 aufweisen; insbesondere handelt es sich hierbei um die Kationen der Elemente Si, B, P, Ge, As. Netzwerkbildner stehen hierbei im Gegensatz zu Netzwerkwandlern wie beispielsweise Na, K, Ca, Ba mit üblichen Koordinationszahlen von 6 und mehr, sowie Zwischenoxiden wie Al, Mg, Zn, welche vorwiegend Oxidationszahlen von 4 bis 6 aufweisen.

Der hohe Anteil an Nerzwerkbildnern in Verbindung mit dem geringen Anteil an Alkalimetalloxiden führt zu einem Flachglas mit sehr guten dielektrischen Eigenschaften. So weist das Flachglas gemäß einer Ausführungsform eine Dielektrizitätskonstante ε von kleiner 4,3 und einen dielektrischen Verlustfaktor tan δ von 2*10⁻⁴ oder weniger bei 10 GHz auf.

Das Flachglas enthält als Netzwerkbildner sowohl SiO₂ als auch B₂O₃. Das Gewichtsverhältnis von SiO₂ zu B₂O₃ beträgt höchstens 3,5. Insbesondere liegt das Gewichtsverhältnis von SiO₂ zu B₂O₃ im Bereich von 2,5 bis 3,5, besonders bevorzugt im Bereich von 2,9 bis 3,3.

Eine Ausführungsform sieht vor, dass das Flachglas Al₂O₃ enthält. Vorzugsweise liegt der Gehalt an Al₂O₃ im Bereich von 0,1 bis 2 Mol.-%, insbesondere im Bereich von 0,5 bis 2 Mol.-%.

Die offenbarten Gehalte und molaren Verhältnisse beziehen sich insbesondere auf die Glaszusammensetzung im Bulkbereich. Abhänigig von der jeweiligen Ausführungsform kann diese Glaszusammensetzung auch für die oberflächennahen Bereiche des Flachglases gelten. Gemäß einer alternativen Ausführungsform weist das Glas in oberflächennahen Bereichen eine vom Bulkbereich abweichende Zusammensetzung auf.

Das spezfische Verhältnis von SiO₂ zu B₂O₃ in Verbindung mit einem hohen Anteil an Netzwerkbildnern sowie einem geringen Gehalt an Alkalimetalloxiden führt dazu, dass im Flachglas eine Nanostruktur mit Phasen unterschiedlicher Glaszusammensetzungen vorliegt. Hierbei weist das Glas des Flachglases SiO₂-reiche Phasen und B₂O₃-reiche Phasen auf, wobei eine Entmischung der Phasen im Nanobereich vorliegt. Vorzugsweise umfasst das Flachglas darüberhinaus keine weitere Phasen. Unter dem Begriff "SiO₂-reiche Phase" bzw. "B₂O₃-reiche Phase" wird eine Phase des Glases verstanden, in der der SiO₂-Gehalt bzw. der B₂O₃-Gehalt größer ist als in der zur Synthese des Glases ermittelten Glaszusammensetzung. Insbesondere weist das Glas in der SiO₂-reichen Phase einen höheren SiO₂-Gehalt auf als in der B₂O₃-reichen Phase und umgekehrt.

Gemäß einer Ausführungsform weist das Glas eine Nanostruktur mit einer bimodalen Verteilung der Phasen auf. Vorzugsweise bilden die SiO₂-reichen Phasen eine Matrix, in der die B₂O₃-reichen Phasen verteilt vorliegen. Insbesondere liegen die B₂O₃-Phasen als Tröpfen verteilt in einer Matrix vor, die aus den SiO₂-reichen Phasen gebildet wird.

Der Anteil an SiO₂ im Flachglas beträgt in einer Ausführungsform zwischen 65 Mol-% und 85 Mol-%, bevorzugt zwischen 70 Mol-% und 80 Mol-%, insbesondere zwischen 72 Mol-% und 80 Mol-%.

Der hohe Borgehalt des Glases in Verbindung mit der Nanostruktur führt zu einer guten Ätzbarkeit des Flachglases sowohl in sauren als auch basischen Ätzmedien. Aufgrund des hohen Anteils an Netzwerkbildnern kann das Flachglas auch mit Flusssäure oder entsprechenden Mischsäuren geätzt werden. Gemäß einer Ausführungsform weist das Flachglases einen B₂O₃-Gehalt zwischen 15 Mol-% und 30 Mol-%, insbesondere vorzugsweise zwischen 18 Mol-% und 25 Mol-% auf.

Das Flachglas eignet sich besonders für Ätzprozesse mit basischen, wässrigen Ätzmedien wie KOH oder NaOH. Gemäß einer Ausführungsform ist das Flachglas ein Glas der Basenklasse III.

Die B₂O₃-reichen Phasen des Glases weisen eine geringere Stabilität gegenüber Basen auf als einphasige Borosilikatgläser mit einem vergleichbaren B₂O₃-Gesamtgehalt. Bei basischen Ätzprozessen liegen die Ätzraten des Flachglases daher deutlich oberhalb der Ätzraten einphasiger Borosilikatgläser. So können beim Ätzen mit wässriger KOH-Lösung Ätzraten von mehr als 8 µm/h oder sogar mehr als 10 µm/h erreicht werden. Gemäß einer Ausführungsform ist das Flachglas beim Ätzen mit wässriger, 12M KOH-Lösung bei einer Temperatur von 100°C mit Ätzraten im Bereich von 3,2 bis 7,7 µm/h ätzbar.

Die B₂O₃-reichen Phasen weisen eine geringere Stabilität gegenüber Basen auf als die SiO₂-reichen Phasen. Somit verläuft der Ätzprozess mit zumindest zwei unterschiedlichen Ätzraten ab. Bei basichen Ätzprozessen ist hierbei die Ätzrate bei der Ätzung der B₂O₃-reichen Phasen ist größer als die Ätzraten des Ätzprozess der SiO₂-reichen Phasen. Somit werden beim basischen Ätzen zunächst die B₂O₃-reichen Phasen herausgelöst, während die Matrix umfassend die SiO₂-haltigen Phasen erhalten bleibt. Die unterschiedlichen Stabilitäten der beiden Phasen führt somit dazu, dass nach einem Ätzvorgang das Glas in den oberflächennahen Bereichen und insbesondere an der Oberfläche des Flachglases einen geringeren Gehalt an B₂O₃ aufweist als das Glas im Bulkbereich. Anders ausgedrückt: das Flachglas weist an der Oberfläche einen höheren SiO₂-Gehalt auf als im Bulkbereich. Die nach dem Ätzvorgang auf der Oberfläche des Flachglases zurückbleibende SiO₂-reiche Phase enthält Kavitäten an Stelle von B₂O₃-reichen Phasen.

Eine Weiterbildung sieht vor, dass der Gehalt an SiO₂ an der Oberfläche und/oder oberflächennahen Bereichen des Flachglases größer ist als im Bulkbereich. Vorzugsweise weist das Flachglas zumindest bereichsweise geätzte Oberflächen auf und/oder ist ein geätztes Flachglas. Vorzugsweise umfasst das Flachglas zumindest einen Teilbereich, der an der Oberfläche Kavitäten aufweist. Die Abmessungen und Verteilung der Kavitäten entspricht hierbei denen der B₂O₃-reichen Phasen vor dem Ätzen. Durch die Kavitäten an der Oberfläche des Flachglases wird die Oberfläche des Rauheit des Flachglases erhöht, was sich wiederum vorteilhaft auf die Anhaftung einer metallischen Beschichtung, beispielsweise beim Abscheiden einer metallischen Beschichtung, auswirkt.

Die Rauheit des Substrats an der Grenzfläche zur Metallbeschichtung wirkt sich auf das Aufbringen bzw. die Anhaftung einer metallischen Beschichtung als auch auf die Hochfrequenzeigenschaften des Glases aus. Eine geringe Rauheit führt zu besseren Hochfrequenzeigenschaften, da die Streuverluste an der Grenzfläche zwischen Metall und Substrat reduziert werden. Hierbei gilt, je höher die Frequenzkomponenten, desto kleiner muss die Rauheit sein. Rauheiten Ra von weniger als 100 nm haben sich als besonders vorteilhaft herausgestellt. Für die Haftung der metallischen Schichten am Glassubstrat ist dagegen eine größere Rauheit vorteilhaft, insbesondere Rauheiten Ra von mehr als 10 nm. Bei den offenbarten Flachgläsern kann die Rauheit gezielt so eingestellt werden, dass sowohl eine gute Anhaftung der metallischen Beschichtung am Glas als auch gute Hochfrequenzeigenschaften des Glases ermöglicht werden.

Eine Ausführungsform sieht vor, dass das Flachglas zumindest bereichsweise Oberflächen mit einer arithmetischen mitteren Höhe Sa > 50 nm, bevorzugt > 80 nm, besonders bevorzugt > 100 nm, einem quadratischen Höhenmittelwert Sq >80 nm, bevorzugt >120 nm, besonders bevorzugt > 160 nm und/oder einer maximalen Höhe Sz >100 nm, bevorzugt >150 nm, besonders bevorzugt > 200 nm aufweist.

Gemäß einer Ausführungsform weist das Flachglas nach dem Ätzen zumindest bereichsweise Oberflächen mit mittleren Rauheit Ra im Bereich von 5 bis 100 nm, bevorzugt im Bereich von 10 bis 100 nm, besonders bevorzugt im Bereich von 15 bis 100 nm auf. Die Rauheiten wurden mit Weisslichtinterferrometrie bestimmt.

Hierdurch weisen die Flachgläser in den entsprechenden Bereichen eine Rauheit auf, die groß genug ist, um eine gute Anhaftung bei der Metallisierung zu gewährleisten, gleichzeitig jedoch so klein ist, dass eine Streuuung elektromagnetischer Wellen möglichst vermieden oder zumindest verringert wird. Insbesondere gilt für die Rauheit Ra der Oberfläche des Flachglases und der Wellenlänge λ der für die Funktion des jeweiligen Bauteils relevanten elektromagnetischen Strahlung: λ/Ra < 1000

Die Ätzrate beim Ätzen des Flachglases sowie die Rauheit der geätzten Oberflächen kann über die konkrete Ausgestaltung der Nanostrukturierung des Glases, insbesondere über die durchschnittliche Größe der B₂O₃-reichen Phasen, beeinflusst werden. Flachgläser, deren B₂O₃-reiche Phasen eine maximale Querschnittslänge dₘₐₓ von höchstens 100 nm, bevorzugt höchstens 80 nm, besonders bevorzugt höchsten 50 nm und/oder von zumindest 5 nm, bevorzugt zumindest 10 nm aufweisen, haben sich als besonders vorteilhaft in Hinblick auf Ätzbarkeit und Rauheit der geätzten Oberfläche herausgestellt. Eine Ausführungsform sieht vor, dass die B₂O₃-reichen Phasen eine maximale Querschnittslänge im Bereich von 20 bis 50 nm aufweisen. Eine alternative Ausführungsform sieht vor, dass die maximale Querschnittslänge der B₂O₃-reichen Phasen höchstens 20 nm, vorzugsweise höchstens 10 nm beträgt und/oder im Bereich von 5 bis 20 nm liegt.

Die Erfinder haben herausgefunden, dass die konkrete Ausgestaltung der Nanostruktur, insbesondere die Größe der B₂O₃-reichen Phasen, auch über die Kühlrate, mit der das Flachglas in seinem Herstellungsprozess gekühlt wird, beeinflusst werden kann. So führt eine geringere Kühlrate zu größeren B₂O₃-Phasen im Flachglas als eine hohe Kühlrate. Dies ermöglicht es, Rauheit und Ätzbarkeit des Glases über die Kühlrate bei dessen Herstellungsprozess einzustellen, ohne dass hierzu die Glaszusammensetzung verändert werden muss.

Gemäß einer Ausführungsform weist die Glaszusammensetzung des Flachglases einen Anteil von Erdalkalimetallen von weniger als 1 Mol-%, bevorzugt weniger als 0,5 Mol.-% auf. Dies ist in Hinblick auf die Ätzbarkeit des Flachglases vorteilhaft, da das Glas somit nur eine geringe Konzentration an multivalenten Kationen enthält, die beim Ätzprozess schwerlösliche Niederschlägen bilden und so zu einer Passivierung der Glasoberfläche führen können. Vorzugsweise ist das Glas daher frei von Kalizum, Barium und/oder Strontium. Eine Ausführungsform sieht vor, dass das Glas frei von Titan und/oder Zirkonium ist. Unter dem Ausdruck "frei von" wird im Sinne der Offenbarung verstanden, dass der Gehalt der entsprechenden Bestandteile höchsten 500 ppm beträgt. Die entsprechenden Substanzen können dabei beispielsweise als Verunreinigung im eingesetzten Gemenge in das Glas eingebracht werden.

Eine Ausführungsform sieht vor, dass das Flachglas einen Gehalt an Alkalimetalloxiden von 1 bis 4 Mol-%, insbesondere im Bereich von 1 bis 3,5 Mol-% aufweist. Insbesondere enthält das Glas Natriumoxid und Litihiumoxid, wobei das molare Verhältnis von Na₂O zu Li₂O im Bereich von 1,2 bis 3,8, bevorzugt im Bereich von 1,2 bis 3,4 liegt. Hierdurch weist das Flachglas einen linearen thermischen Ausdehnungkoeffizientn α₂₀₋₃₀₀ von weniger als 3,3 10⁻⁶ K⁻¹auf. Dies ist insbesondere bei der Verwendung des Flachglases bei der Laserprozessierung vorteilhaft.

Flachgläser mit nachfolgender Zusammensetzung haben sich besonders vorteilhaft zur Verwendung zur Herstellung elektronischer Bauteile, insbesondere TGV-Interposer herausgestellt:

| | |
|---|---|
| SiO₂ | 65 Mol-% bis 85 Mol-%, bevorzugt 70 Mol-% bis 85 Mol-%, besonders bevorzugt 72 Mol-% bis 80 Mol-% |
| B₂O₃ | 15 Mol-% bis 30 Mol-%, bevorzugt 20 Mol-% bis 25 Mol-% |
| Al₂O₃ | 0,2 Mol-% bis 2 Mol-% |
| Na₂O | 0,5 Mol-% bis 2,0 Mol-%, bevorzugt 0,8 bis 1,5 Mol-% |
| K₂O | 0 Mol-% bis 1 Mol-%, bevorzugt 0,8 bis 1,5 Mol-% |
| Li₂O | 0,2 Mol-% bis 1,5 Mol-%. |

Gemäß einer Ausführungsform besitzt das Flachglas einen hohen elastischen Anteil von 62 bis 65% und einen E-Modul von kleiner als 60 GPa, bevorzugt kleiner 55 GPa aufweist. Der elastische Anteil ergibt sich aus der mechanischen Charakterisierung des Glases mit einem Vickers Indenter. Dabei gibt es unter der Last nach, wobei sich die Verformung in einen elastischen und einen plastischen Anteil unterteilt. Der elastische Anteil ist dabei reversibel, so dass das Glas nach Entfernen der Last (dem Indenter) in seine ursprüngliche Form zurückkehrt.

Eine Ausführungsform sieht vor, dass das Flachglas zumindest einen strukturierten Bereich, insbesondere einen strukturierten Bereich, der mit Hilfe eines Laserprozesses erzeugt wurde, enthält. Vorzugsweise enthält das Flachglas eine Vielzahl strukturierter Bereiche. Unter einen strukturierten Bereich wird insbesondere ein Bereich des Flachglases verstanden, in dem das Flachglas gegenüber nicht strukturierten Bereichen veränderte Glaseigenschaften, eine abweichende, insbesondere verringerte Glasdicke und/oder eine Aussparung, vorzugsweise in Form eines Kanals aufweist. Hierbei kann das Glas im strukturierten Bereich bzw. in den strukturierten Bereichen beispielsweise eine durch Einwirken eines Ultrakurz-Puls-Lasers (UKP-Lasers) veränderte, insbesondere verringerte Festigkeit aufweisen. Bei einem nachfolgenden Ätzprozess ist ein entsprechend strukturierter Bereich mit einer höheren Ätzrate ätzbar als die anderen Bereiche des Flachglases, so dass das Flachglas selektiv im struktrurierten Bereich geätzt wird. Dies ermöglicht die gezielte und ortsgenaue Einbringung von Kanälen in das Flachglas, beispielsweise zur Herstellung von Interposern.

Gemäß einer weiteren Ausführungsform umfasst oder bildet der strukturierte Bereich einen Kanal, der durch Laserfilamentierung in das Flachglas eingebracht wurde. Der Kanal kann dabei als Sackloch aussgebildet sein oder sich in seiner Längsausdehnung über die gesamte Glasdicke des Flachglases erstrecken und durch die beiden Seitenflächen des Flachglases brechen.

Eine Weiterbildung sieht vor, dass das Flachglas zumindest im strukturierten Bereich bzw. in den strukturierten Bereichen geätzte Oberflächen aufweist. Vorzugsweise sind alle Oberflächen des Flachglases geätzt und/oder weisen in den oberflächennahen Bereichen eine geringere B₂O₃-Konzentration auf als im Bulkbereich.

Gemäß einer Ausführungsform weist das Flachglas geätzte Oberflächen und zumindest im strukturierten Bereich bzw. den strukturierten Bereichen eine metallische Beschichtung, vorzugsweise eine kupferhaltige Beschichtung auf.

Die Erfindung betrifft auch ein Verfahren zur Herstellung eines strukturierten Flachglases mit einer metallischen Beschichtung, insbesondere zur Verwendung als TGV-Interposer. Das Verfahren umfasst zumindest die folgenden Schritte:
a) Bereitstellen eines Flachglases, wobei das Flachglas Oxide von Netzwerkbildern in einem Gehalt von höchstens 99 Mol-% und vorzugsweise mit einem Gehalt im Bereich von 85 bis 99 Mol.-% umfasst, das Flachglas als Netzwerkbildner SiO₂ und B₂O₃ enthält und das Gewichtsverhältnis von SiO₂ zu B₂O₃ höchstens 3,5 beträgt, der Gehalt an Alkaimetalloxiden im Flachglas höchstens 4 Mol-% beträgt und das Flachglas eine Nanostruktur umfassend SiO₂-reiche Phasen und B₂O₃-reiche Phasen aufweist,
b) Einbringen zumindest eines strukturierten Bereichs in das in Schritt a) bereitgestellte Flachglas durch Laserstrukturierung,
c) Ätzen des in Schritt b) strukturierten Flachglases, wobei an der Oberfläche des Flachglases die B₂O₃-reiche Phase ausgelöst wird, so dass das Flachglas an der Oberfläche einen geringeren B₂O₃-Gehalt aufweist als im Bulkbereich und wobei im strukturierten Bereich durch Auslösen des Glases bevorzugt ein Kanal gebildet wird, wobei sich der Kanal von einer Seitenfläche des Flachglases zur anderen Seitenfläche des Flachglases erstreckt,
d) Abscheiden einer metallischen Beschichtung, vorzugweise einer kupferhaltigen Beschichtung, auf der Oberfläche des in Schritt c) erhaltenen Kanals durch Metallabscheidung.

Vorzugsweise erfolgt das Ätzen in Schritt c) mit einem wässrigen, basischen Ätzmedium, bevorzugt in einer wässrigen KOH-Lösung, insbesondere bevorzugt in 12 M KOH bei 100°C. Hierbei können insbesondere Ätzraten von zumindest 5 µm/h, bevorzugt von zumindest 8 µm/h oder sogar vonzumindest 10 µm/h erreicht werden. Gemäß einer Ausführungsform liegt die Ätzrate im Bereich von 3 bis 8 µm/h.

In Schritt d) kann das Abscheiden der metallischen Beschichtung gemäß einer Ausführungsform durch chemische Abscheideprozesse erfolgen. Insbesondere kann dies durch einen mehrstufigen Prozess erfolgen. In dieser Ausführungsform wird in einem ersten Schritt eine haftvermittelnde Schicht abgeschieden. Hierbei kann es sich beispielsweise um eine nass-chemisch abgeschiedene Schicht umfassen Zinkoxid oder Zinnoxid handeln. Alternativ kann die haftvermittelnde Schicht auch physikalisch, beispielsweise durch Sputtern oder durch ein PVD-Verfahren (physical vapor deposition) abgeschieden werden. Hier kann die haftvermittelnde Schicht insbesondere Titan oder Chrom enthalten.

Nach der Abscheidung der haftvermittlernden Schicht erfolgt in einem zweiten Schritt die Abscheidung der Metallschicht, insbesondere einer Kupferschicht. Dies kann beispielsweise chemisch über einen galvanischen Prozess oder physikalisch über einen Sputter-Prozess erfolgen.

Das offenbarte Glas weist vorzugsweise ein geringes Ausmuscheln bei scharfer mechanischer Belastung (*sharp impact*) bzw. Kratzen (*scratchen*) aus. Dadurch ist die Freisetzung von störenden Glaspartikeln durch mechanische Belastung wie beispielsweise Kratzer minimiert. Die geringe Ausmuschelung kann auf den hohen Anteil an Netzwerkbildnern und den hohen B₂O₃-Gehalt zurückgeführt werden. Hierdurch kann ein günstiges Verhältnis aus E-Modul zu Poisson-Zahl eingestellt werden. Dies führt zu einem hohen elastischen Anteil im Glas. wodurch sich das Material bei mechanischer Belastung verdichten lässt. Gemäß einer Ausführungsform liegt der elastische Anteil im Glas im Bereich von 62 bis 65% und der E-Modul ist kleiner als 60 GPa. Bei Kalknatrongläsern liegt der elastische Anteil im dagegen bei lediglich 50%.

Des Weiteren betrifft die Erfindung die Verwendung des offenbarten Flachglases, insbesondere eines entsprechenden Flachglases mit zumindest einem strukturierten Bereich und einer metallischen Beschichtung, als elektronisches Bauteil oder Komponente in einem elektronischen Bauteil, insbesondere als TGV-Interposer, als Substrat für *"antenna in package"-* Anwendungen oder als Substrat für automotive Anwendungen.

Die Erfindung soll nachfolgend anhand der Figuren und ohne Beschränkung hierauf eingehender beschrieben werden. Gleiche Bezugszeichen bezeichnen dabei gleiche oder ähnliche Elemente.

Es zeigen:
Fig. 1: eine schematische Darstellung eines Querschnitts durch ein Flachglas gemäß einer Ausführungsform,
Fig.2 und 3: SEM Aufnahmen von Querschnitten durch ein Flachglas gemäß zweier Ausführungsbeispiele mit unterschiedlichen Glaszusammensetzungen,
Fig. 4: Dilatometerkurven der in Fig. 2 und 3 gezeigten Ausführungsbeispiele,
Fig.5: SEM Aufnahme eines Querschnittes durch ein Flachglas gemäß eines weiteren Ausführungsbeispiels,
Fig. 6: Dilatometerkurven zweier Ausführungsbeispiele, die mit unterschiedlichen Kühlraten gekühlt wurden,
Figs. 7,8: schematische Darstellungen eines Querschnitts durch ein Flachglas mit geätzten Oberflächen gemäß einer Ausführungsform,
Fig. 9: eine SEM-Aufnahme einer geätzten Oberfläche eines Flachglases gemäß einem Ausführungsbeispiel,
Fig. 10: eine schematische Darstellung eines Flachglases gemäß einem Ausführungsbeispiel,
Fig. 11: eine schematische Darstellung des in Fig. 10 gezeigten Ausführungsbeispiel nach dem Einbringen eines laserstrukturierten Bereichs,
Fig. 12: eine schematische Darstellung des in Fig. 11 gezeigten Ausführungsbeispiels nach dem Ätzvorgang,
Fig. 13, 14: schematische Darstellungen strukturierter Flachgläser mit metallischer Beschichtung gemäß zweier Ausführungsbeispiele,
Fig. 15: mikroskopische Aufnahmen der Glasoberfläche eines Glases gemäß einer Ausführungsform nach Kratztest mit unterschiedlichen Belastungen und
Fig. 16 mikroskopische Aufnahmen der Glasoberfläche eines Vergleichsbeispiels nach Kratztest mit unterschiedlichen Belastungen.

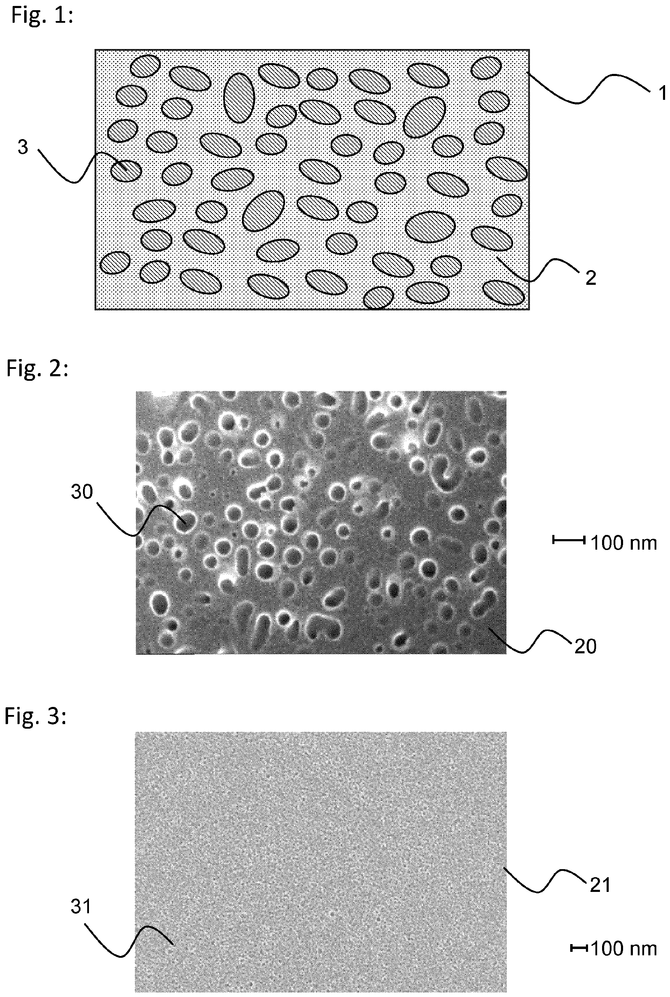

Figur 1 zeigt schematisch einen Querschnitt durch ein Flachglas 1 gemäß einer Ausführungsform. Das Flachglas 1 weist eine bimodale Nanostruktur auf, bei der B₂O₃-reiche Phasen 3 in einer SiO₂-reichen Matrix 2 verteilt sind. Im Flachglas 1 liegt somit eine Phasenentmischung auf Nanoebene vor.

Fig. 2 zeigt eine entsprechende SEM-Aufnahme eines Querschnitts eines Flachglases gemäß einem ersten Ausführungsbeispiel. Das Flachglas weist hierbei folgende Zusammensetzung in Gew.-% auf:

| | |
|---|---|
| SiO₂ | 71,5 |
| B₂O₃ | 24,4 |
| Al₂O₃ | 1,0 |
| Li₂O | 0,44 |
| K₂O | 0,86 |
| Na₂O | 1,73 |

Die SEM-Aufnahme des Ausführungsbeispiels zeigt eine Nanostruktur mit einer bimodalen Phasenverteilung, in der B₂O₃-reichen Phasen 30 in einer SiO₂-reichen Phase 20 verteilt vorliegt. Die maximale Querschnittslänge der B₂O₃-reichen Phase 30 beträgt höchstens. 100 nm, wobei die durchschnittliche maximale Querschnittslänge im Bereich von 30 bis 60 nm liegt. Das Flachglas dieses Ausführungsbeispiels weist eine Dielektrizitätskonstante ε von 4,05 und einen Verlustfaktor tanδ von 0,0021 bei 10 Ghz und somit vorteilhafte dielektrische Eigenschaften für die Verwendung in Hochfrequenzanwendungen auf. Der thermische Ausdehnungskoeffizient des Glases α₂₀₋₃₀₀ beträgt 3,29*10⁻⁶ K⁻¹, so dass das Glas gut in lasergestützten Bearbeitungsprozessen eingesetzt werden kann.

Durch die Nanostruktur in Verbindung mit dem hohen B₂O₃-Gehalt kann das Glas in basischen Ätzmedien mit einer hohen Ätzrate geätzt werden. So weist ein Ätzprozess des Flachglases in 12 M KOH bei 100°C Ätzraten von mehr als 10 µm/h auf. Da das Glas in diesem Ausführungsbeispiel keine Erdalkalimetalloxide aufweist, werden zudem beim Ätzvorgang keine schwerlöslichen Auslöseprodukte gebildet, die zu einer Niederschlagbildung führen könnten. Somit weist das Flachglas eine gute Ätzbarkeit auf.

Fig. 3 zeigt eine SEM-Aufnahme eines Querschnittes durch ein Flachglas gemäß einem weiteren Ausführungsbeispiel. Die Nanostruktur des in Fig. 3 gezeigten Glases zeigt ebenfalls SiO₂-reiche Phasen 21 und B₂O₃-reiche Phasen 31, jedoch weisen die B₂O₃-reichen Phasen deutlich geringere durchschnittliche maximale Querschnittslängen auf als in dem in Fig. 2 gezeigten Ausführungsbeispiel. So beträgt die durchschnittliche maximale Querschnittslänge der B₂O₃-reichen Phasen 31 des in Fig. 3 gezeigten Ausführungsbeispiels höchstens 5 nm. Die in den Figuren 2 und 3 gezeigten Ausführungsbeispiele unterscheiden sich hierbei hinsichtlich ihrer Bulkzusammensetzung. Insbesondere weist das in Fig. 3 gezeigte Glas einen höheren Anteil an SiO₂ auf.

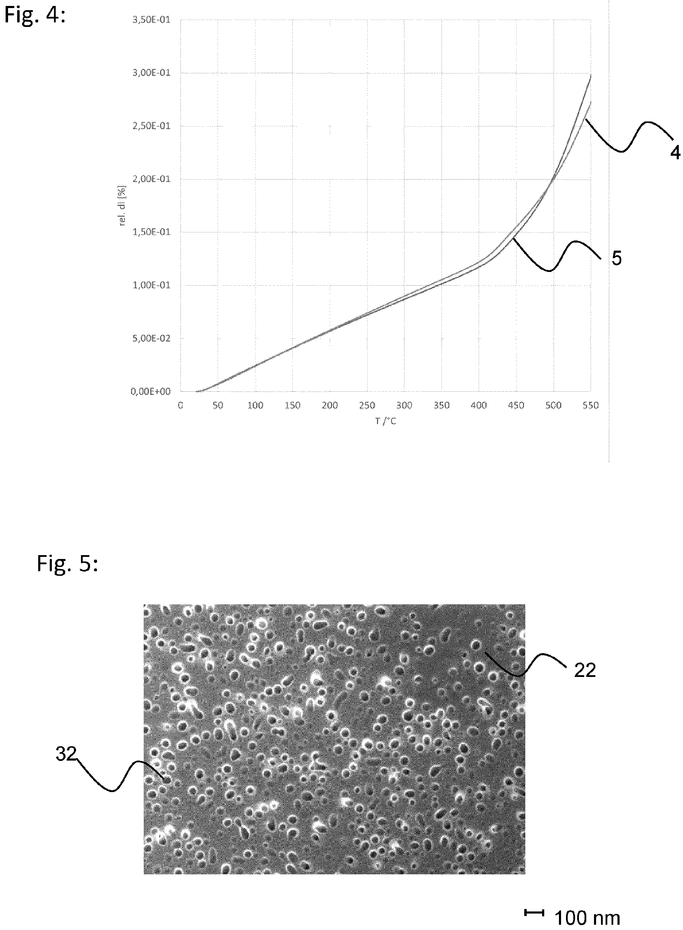

Fig. 4 zeigt die Dilatometerkurven der in den Figuren 2 und 3 gezeigten Ausführungsbeispiele. Die Kurve 4 ist hierbei dem in Fig. 2 gezeigten Ausführungsbeispiel und Kurve 5 dem in Fig. 3 gezeigten Ausführungsbeispiel zuzuordnen. Aus Fig. 4 wird deutlich, dass sich die unterschiedlichen Glaszusammensetzungen und Nanostrukturen der Gläser auf deren Glasübergangstemperaturen auswirken.

Fig. 5 zeigt eine SEM-Aufnahme eines Flachglases gemäß einem weiteren Ausführungsbeispiel. Das in Fig. 5 gezeigte Ausführungsbeispiel weist die gleiche Glaszusammensetzung auf wie das in Fig. 2 gezeigte Ausführungsbeispiel, wurde jedoch bei seiner Herstellung mit einer anderen Kühlrate als das in Fig. 2 gezeigte Ausführungsbeispiel gekühlt. Während das in Fig. 2 gezeigte Ausführungsbeispiel mit einer Kühlrate von 20 K/h auf eine Temperatur von 580°C gekühlt wurde, betrug die Abkühlrate bei dem in Fig. 5 gezeigten Ausführungsbeispiel 60 K/h auf eine Temperatur von 510°C

Die in den Fig. 3 und 5 gezeigten SEM-Aufnahmen zeigen, dass sich die beiden Ausführungsbeispiele hinsichtlich ihrer Nanostruktur unterscheiden. Beide Ausführungsbeispiele weisen eine bimodale Phasenverteilung von B₂O₃-reichen Phasen 30, 32 in einer SiO₂-reichen Matrix 20, 22 auf, jedoch unterscheiden sich die Ausführungsbeispiele hinsichtlich der Größer der B₂O₃-reichen Phasen 30, 32. Das in Fig. 5 gezeigte Ausführungsbeispiel weist dabei kleinere B₂O₃-reiche Phasen 32 auf als das in Fig. 2 gezeigte Ausführungsbeispiel. Bei dem in Fig. 5 gezeigten Ausführungsbeispiel weisen die B₂O₃-reichen Phasen einen mittleren Durchmesser von 20 nm auf. Das in Fig. 5 gezeigte Ausführungsbeispiel zeigt eine geringer ausgeprägte Phasenentmischung als das in Fig. 2 gezeigte Ausführungsbeispiel. Langsame Kühlraten und höhere Kühltemperaturen führen somit zur Ausbildung einer Nanostruktur mit größeren B₂O₃-reichen Phasen.

Aus den Fig. 2 und 5 wird somit deutlich, dass die Nanostruktur des Flachglases nicht nur über dessen Zusammensetzung, sondern auch durch deren Herstellungsprozess, insbesondere über Kühlrate und Kühltemperatur eingestellt werden kann.

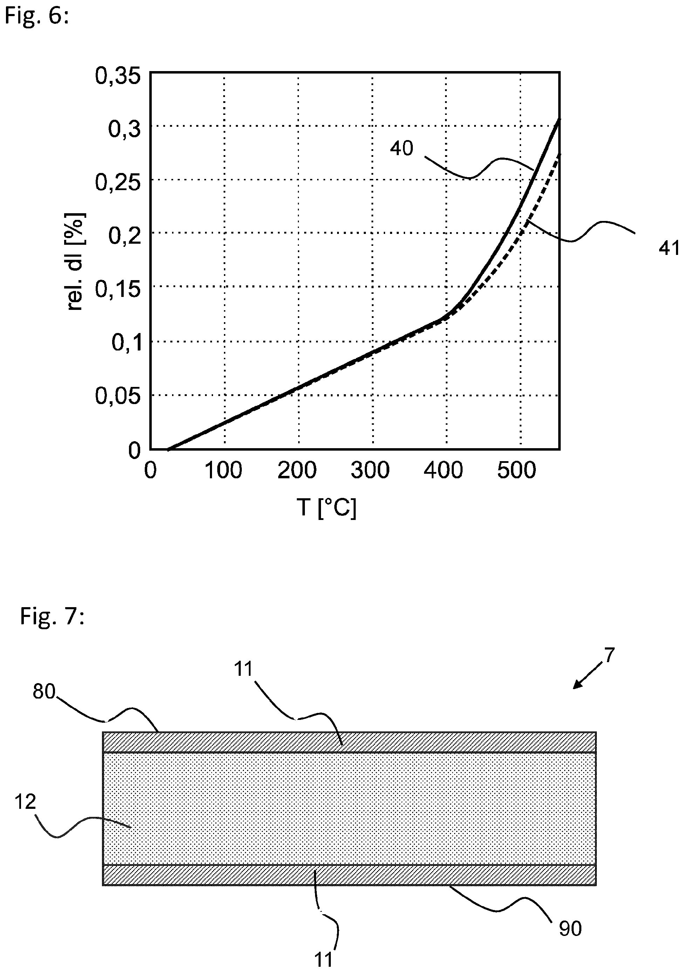

Fig. 6 zeigt die Dilatometerkurven 40, 41 der in den Fig. 2 und 5 gezeigten Ausführungsbeispiele. Kurve 41 ist dabei dem Ausführungsbeispiel aus Fig. 2 und Kurve 40 dem Ausführungsbeispiel aus Fig. 5 zuzuordnen. Aus Fig. 6 wird deutlich, dass beide Ausführungsbeispiele zwei Glasübergangstemperaturen aufweisen, was auf die bimodale Nanostruktur mit zwei unterschiedlichen Phasen zurückzuführen ist. Der jeweilige Verlauf der Dilatometerkurven 40, 41 und somit die Glasübergangstemperaturen unterscheiden sich dabei auf Grund der unterschiedlichen Phasengrößen sowie des unterschiedlichen Anteils der B₂O₃-reichen Phasen.

Fig. 7 zeigt einen schematischen Querschnitt durch ein Flachglas 7, das geätzte Oberflächen 80, 90 aufweist. Das Flachglas 7 kann durch Ätzen, insbesondere durch basisches Ätzen des in Fig. 1 dargestellten Flachglases 1 erhalten werden. Anders als das Flachglas 1 weist das geätzte Flachglas 7 keine homogene Zusammensetzung über die gesamte Glasdicke auf. Durch den Ätzprozess wurden an den geätzten Glasoberflächen 80, 90 und in den oberflächennahen Bereichen 11 des Flachglases 7 die B₂O₃-reichen Phasen schneller aufgelöst als die SiO₂-reichen Phasen, da die SiO₂-reichen Phasen gegenüber Alkalien eine höhere Beständigkeit aufweisen. Dies hat zur Folge, dass das geätzte Glas 7 an den Oberflächen 80, 90 und in den oberflächennahen Bereichen 11 eine höhere SiO₂-Konzentration im Glas aufweist als im Bulkbereich 12. Unter dem Bulkbereich 12 wird insbesondere der Bereich im Inneren des Flachglases 7 verstanden. Das Flachglas 7 wurde somit im Bulkbereich 12 nicht geätzt. Somit entspricht die Zusammensetzung und Nanostruktur des Flachglases 7 im Bulkbereich 12 der Zusammensetzung und Nanostruktur des Flachglases 1 vor dem Ätzprozess.

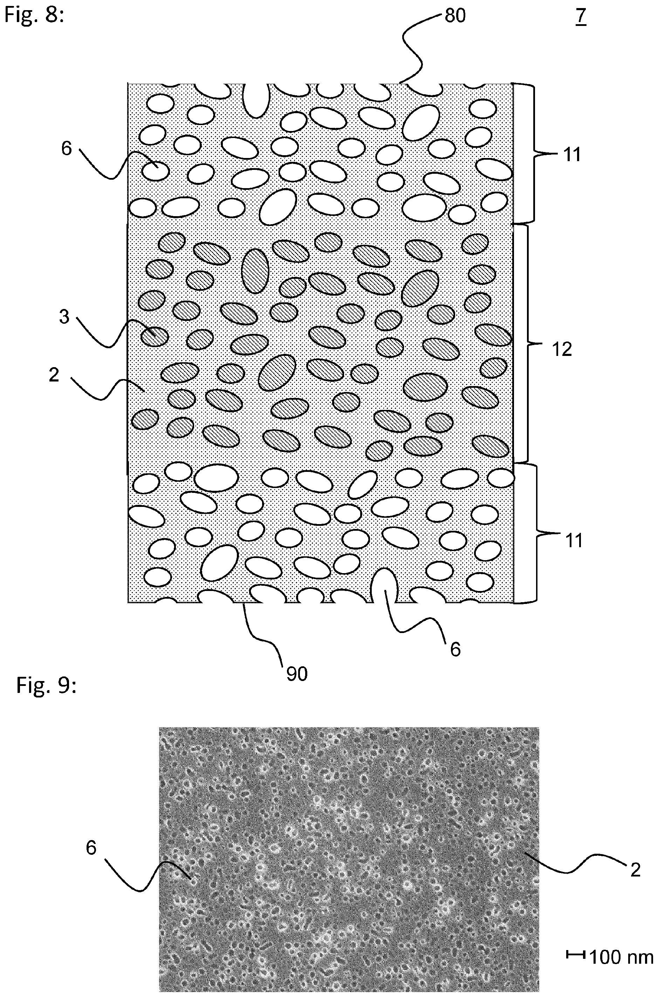

Fig. 8 zeigt einen schematischen Querschnitt durch ein geätztes Flachglas. Das Flachglas 7 umfasst die geätzten Oberflächen 80, 90, die oberflächennahen Bereiche 11 sowie einen Bulkbereich 12. In Fig. 6 sind Bulkbereich 12 und oberflächennahe Bereiche 11 nicht maßstabsgetreu dargestellt. Unter dem oberflächennahen Bereich 11 wird insbesondere der Bereich des Flachglases verstanden, in dem eine Auslösung der B₂O₃-reichen Phasen durch das Ätzmedium erfolgt. Die Ausdehnung des oberflächennahen Bereichs 11 im Flachglas kann somit auch von den Ätzbedingungen abhängen. Gemäß einer Ausführungsform reichen die oberflächennahen Bereiche 11 ausgehend von den Oberflächen 8, 9 bis zu einer Tiefe von 100 nm.

Durch die Auslösung der B₂O₃-reichen Phasen an den Oberflächen 80, 90 und den oberflächennahen Bereichen 11 werden Kavitäten 6 gebildet. Hierdurch weisen die geätzten Oberflächen 80, 90 des Flachglases eine erhöhte Oberfläche und Rauheit im Nanometer-Bereich auf. Die Rauheit korreliert hierbei mit der Größe der Kavitäten 6 und somit der Größe der B₂O₃-reichen Phasen im Flachglas vor dem Ätzen. Die Rauheit der geätzten Oberflächen 80, 90 kann somit über die Nanostruktur des Flachglases eingestellt werden. Gemäß einer Ausführungsform weist das Flachglas an den Oberflächen 80, 90 eine Rauheit Sa von zumindest 5 nm oder sogar von zumindest 10 nm auf.

Fig. 9 zeigt eine SEM-Aufnahme eines oberflächennahen Bereichs 11 eines geätzten Flachglases 7 eines weiteren Ausführungsbeispiels. Im gezeigten Bereich weist das Flachglas eine SiO₂-reiche Matrix 2 auf, in denen Kavitäten 6 verteilt sind.

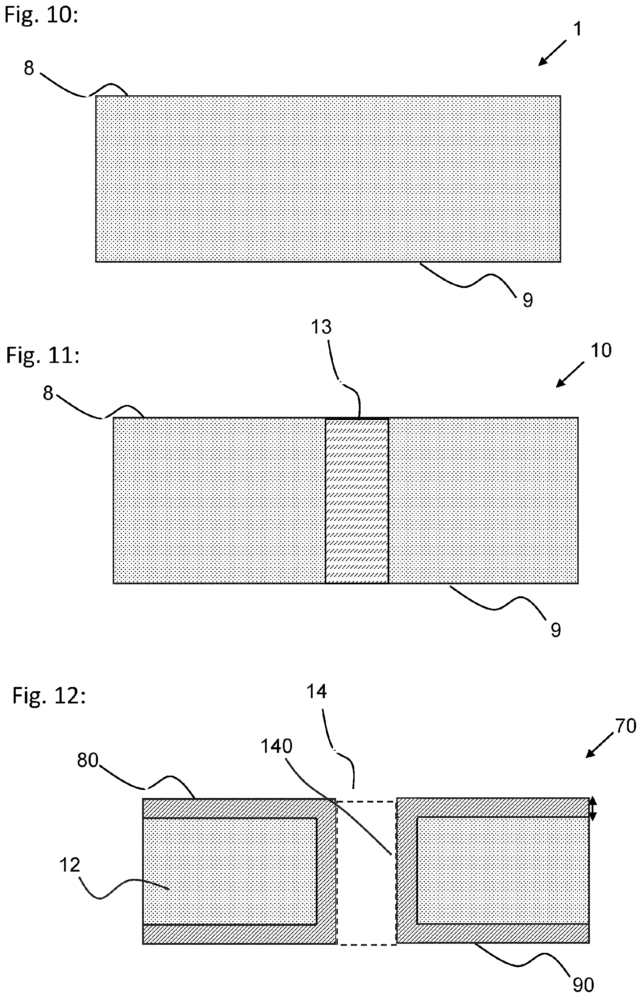

Die Fig. 10 bis 13 zeigen schematisch ein Verfahren zur Herstellung eines strukturierten und metallisierten Flachglases 71. Hierzu wird zunächst ein Flachglas 1 mit der erfindungsgemäßen Zusammensetzung und Nanostruktur bereitgestellt. Das entsprechende Flachglas 1 wird in Fig. 10 dargestellt und weist zwei Oberflächen 8, 9 auf.

Im Flachglas 1 wird in einem Laserstrukturierungsprozess zumindest ein strukturierter Bereich 13 erzeugt. Das entsprechend strukturierte Flachglas 10 ist in Fig. 11 dargestellt.

In dem in Fig. 11 dargestellten Ausführungsbeispiel wurde im Flachglas 10 durch Lasereinstrahlung ein strukturierter Bereich 13 erzeugt, der eine verringerte mechanische Festigkeit aufweist. Hierdurch kann bei einem nachfolgenden Ätzprozess die Ätzrate im strukturierten Bereich 13 größer sein als in nicht strukturierten Bereichen des Flachglases 10, so dass das Flachglas 10 selektiv oder zumindest verstärkt in den strukturierten Bereichen 13 geätzt wird und so entsprechende Strukturen, beispielsweise in Form von Kanälen, erzeugt werden.

Alternativ oder zusätzlich kann das Flachglas einen oder mehrere strukturierte Bereiche 13 aufweisen, die einen Kanal bilden, dessen Längsausdehnung über die gesamte Glasdicke des Flachglases 10 verläuft und die Oberflächen 8, 9 durchbricht. So kann der strukturierte Bereich 13 eine Laserfilamentierung aufweisen, bei durch einen nachfolgenden Ätzprozess dann aufgeweitet werden kann.

Alternativ oder zusätzlich kann das Flachglas 10 auch strukturierte Bereiche 13 aufweisen, in denen die Glasdicke durch Laserablation lediglich reduziert ist, ohne dass es zu einer Kanalbildung kommt. So können die strukturierten Bereiche 13 beispielsweise in Form von oberflächlichen Lasermarkierungen vorliegen.

In einem nachfolgenden Prozessschritt wird das strukturierte Flachglas 10 mit einem Ätzmedium, vorzugsweise mit einem wässrigen, basischen Ätzmedium behandelt. Dies hat zur Folge, dass in den oberflächennahen Bereichen des Flachglases bevorzugt die B₂O₃-reichen Phasen ausgelöst werden. Da in dem in Fig. 11 dargestellten Ausführungsbeispiel die Ätzrate im strukturierten Bereich 13 höher ist als in den umliegenden Bereichen des Flachglases 10, wird das Glas im strukturierten Bereich 13 schneller ausgelöst als in den anderen Bereichen, so dass sich ein Kanal 14 bildet. Ein entsprechend geätztes Flachglas 70 wird schematisch in Fig. 12 dargestellt.

Das in Fig. 12 dargestellte Flachglas 70 umfasst geätzte Oberflächen 80, 90, die eine höhere SiO₂-Konzentration aufweisen als der Bulkbereich 12 des Flachglases 70. Die Oberflächen 80, 90 sind rau und weisen bevorzugt eine arithmetische mittere höhe Sa > 50 nm, einen quadratischen Höhenmittelwert Sq > 80 nm und/oder eine maximale Höhe Sz > 100 nm auf. Die Wandungen 140 des strukturierten Bereichs bzw. des Kanals 14 weisen ebenfalls geätzten Oberflächen auf. Bei dem in den Fig. 8 bis 10 gezeigten Ausführungsbeispiel weisen die Wandungen 140 im Wesentlichen die gleiche Rauheit auf wie die Oberflächen 80, 90. Alternativ können die Wandungen 140 auch eine abweichende, insbesondere eine größere Rauheit aufweisen als die Oberflächen 80, 90. Dies kann beispielsweise dann der Fall sein, wenn durch den jeweiligen Laserprozess zum Einbringen des strukturierten Bereichs 13 vor dem Ätzen bereits die Oberflächen des strukturierten Bereiches 13 modifiziert, insbesondere aufgeraut wurde.

Das strukturierte Flachglas 70 mit geätzten Oberflächen 80, 90, 140 eignet sich aufgrund der Oberflächenstruktur insbesondere zur Metallisierung durch chemische Metallabscheidungsprozesse.

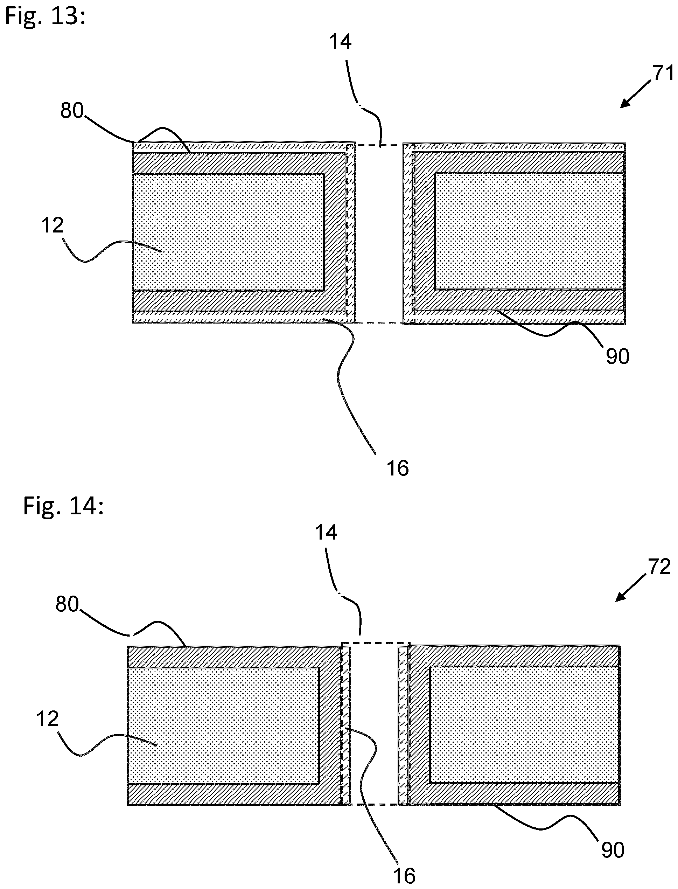

Fig. 13 stellt schematisch ein entsprechendes Flachglas 71 nach dem Metallisierungsprozess dar. In dem in Fig. 13 gezeigten Ausführungsbeispiel sind alle Oberflächen des Flachglases mit einer Kupferbeschichtung 16 beschichtet. Die gute Anhaftung der Beschichtung 16 ist hierbei auf die Oberflächenbeschaffenheit der geätzten Oberflächen des Flachglases 71 zurückzuführen.

Die Beschichtung des Flachglases kann jedoch auch nur in Teilbereichen, insbesondere nur in dem oder den strukturierten Bereichen 14 erfolgen. Ein entsprechendes Ausführungsbeispiel ist schematisch in Fig. 14 dargestellt. Hier ist das Flachglas 72 nur im Bereich der Wandungen 140 des strukturierten Bereichs 14 mit einer metallischen Beschichtung 16 versehen. Eine selektive, lateral begrenzte Metallisierung des strukturierten Flachglases 72 kann durch eine gezielte Auswahl der Nanostruktur des Flachglases in Kombination mit dem gewählten Prozess zur Laserstrukturierung erreicht werden.

Das in Fig. 14 dargestellte Ausführungsbeispiel 72 weist eine geringere Rauheit an den Oberflächen 80, 90 auf als das in Fig. 13 gezeigte Flachglas 71. Dies kann beispielsweise dadurch erreicht werden, dass das Flachglas 72 eine Nanostruktur aufweist, bei der kleinere B₂O₃-reiche Phasen vorliegen als bei dem in Fig. 13 gezeigten Beispiel. Durch die kleineren B₂O₃-reichen Phasen weist das in Fig. 14 gezeigte Flachglas 72 somit nach dem Ätzprozess auch Oberflächen mit einer geringeren Rauheit auf. Die dadurch gebildete Oberfläche ist dabei nicht groß genug, um beim Metallisierungsprozess ein Anhaften bzw. Abscheiden der metallischen Beschichtung auf den geätzten Oberflächen 80, 90 zu ermöglichen. Somit erfolgt auf den geätzten Oberflächen 80, 90 keine Metallabscheidung.

Im strukturierten Bereich 14 weist das Flachglas 72 eine größere Rauheit auf als in den Oberflächen 80, 90, da durch die Laserablation zum Einbringen des strukturierten Bereichs vor dem Ätzen eine Modifikation der Oberfläche erfolgte. Hierbei wurde die Oberfläche der Wandungen des laserstruktuierten Bereichs 13 vergrößert. In Kombination mit der durch den Ätzprozess erzielten Rauheit weist das Flachglas 72 im strukturierten Bereich 14 eine ausreichend große Oberfläche und Rauheit auf, so dass die Bereiche gut metallisiert werden können.

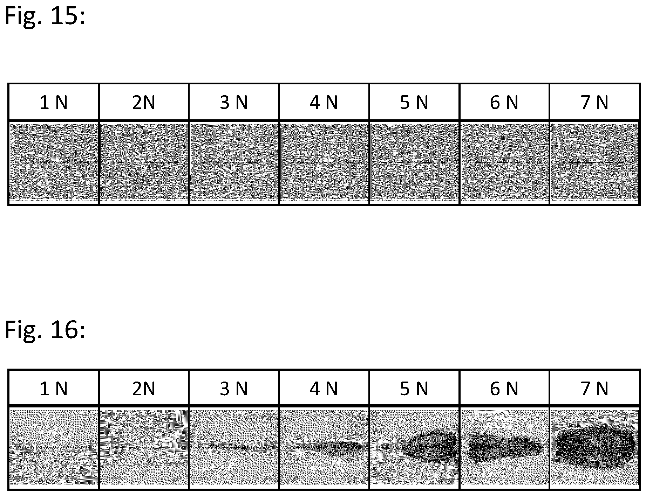

Fig. 15 zeigt mikroskopische Aufnahmen einer Glasoberfläche eines Ausführungsbeispiels nach Kratztesten mit unterschiedlichen Belastungen. Hierbei wurde ein Knoop-Indenter mit der in Fig. 15 angegebenen Last auf die polierte Oberfläche der Probe aufgesetzt und diese dann unter dem Indenter mit einer Geschwindigkeit von 10 mm/min bewegt. Der Indenter kratzt dabei mit seiner Schmalseite entlang der Probe. Aus Fig. 15 wird deutlich, dass beim Ausführungsbeispiel selbst bei einer Belastung mit 7 N lediglich schmale Kratzspuren entstehen, es jedoch nicht zu ausgemuschelten Kratzspuren kommt. Somit setzt das Glas auch unter dieser Beanspruchung keine Partikel frei. Dies kann insbesondere durch die vorteilhafte Kombination von niedrigem E-Modul, Querkontraktionszahl und Härte des Glases erzielt werden. Insbesondere E-Module von weniger als 70 kN/mm² haben sich hier als vorteilhaft herausgestellt. Gemäß einer Ausführungsform weist das Glas ein E-Modul von weniger als 65 kN/mm² oder sogar von weniger als 60 kN/mm² auf. Alternativ oder zusätzlich weist das Glas eine Querkontraktionszahl von höchstens 0,25, vorzugsweise von weniger als 0,23 und/oder eine Vickerhärte von weniger als 570, vorzugsweise von weniger als 500 auf.

Fig. 16 zeigt die mikroskopsichen Aufnahme der Glasoberfläche eines Kalknatronglases nach dem oben beschriebenen Kratztest. Hierbei kommt es bereits bei einer Belastung mit 3 N zu ersten Ausmuschelungen entlang des Kratzers. Bei Belastungen ab 5 N zeigt das Glas deutliche Ausmuschelungen und es kommt zur Partikelbildung. Das in fig. 16 gezeigte Vergleichsbeispiel weist hierbei mit 73 kN/mm² ein deutlich höheres E-Modul auf als das in Fig. 15 gezeigte Ausführungsbeispiel.

Obwohl die vorliegende Erfindung anhand bevorzugter Ausführungsbeispiele beschrieben wurde, ist sie nicht darauf beschränkt, sondern auf vielfältige Weise modifizierbar.

### Bezugszeichenliste

- 1, 10: Flachglas
- 2, 20, 21, 22: SiO₂-reiche Phase
- 3, 30, 31, 32: B₂O₃-reiche Phase
- 4, 5, 40, 41: Dilatometerkurven
- 6: Kavität
- 7, 70, 71, 72: Flachglas mit geätzter Oberfläche
- 8, 9: Seitenflächen von 1, 10
- 11: oberflächennahe Bereiche von 7
- 12: Bulkbereich von 7
- 13: laserstrukturierter Bereich in 10
- 14: strukturierte Bereiche in 70, 71, 72
- 16: metallische Beschichtung
- 70: strukturiertes Flachglas mit geätzten Oberflächen
- 71, 72: strukturiertes Flachglas mit metallischer Beschichtung 16
- 80, 90: geätzte Oberflächen von 7, 70, 71, 72
- 140: Oberfläche des strukturierten Bereichs 14

## Patentansprüche

1. Flachglas (1, 10, 7, 70, 71, 72), insbesondere geeignet zur Herstellung eines elektronischen Bauteils, umfassend zwei gegenüberliegende Seitenflächen (8, 9, 80, 90) sowie einen Bulkbereich (12), wobei das Flachglas (1, 10, 7, 70, 71, 72) Oxide von Netzwerkbildern in einem Gehalt von 85 bis 99 Mol-% umfasst, wobei das Flachglas (1, 10, 7, 70, 71, 72) als Netzwerkbildner SiO₂ und B₂O₃ enthält, das Gewichtsverhältnis von SiO₂ zu B₂O₃ höchstens 3,5 beträgt, der Gehalt an Alkaimetalloxiden im Flachglas (1, 10, 7, 70, 71, 72) höchstens 4 Mol-% beträgt und das Flachglas (1, 10, 7, 70, 71, 72) eine Nanostruktur umfassend zumindest eine SiO₂-reiche Phase (2, 20, 21, 22) und B₂O₃-reiche Phasen (3, 30, 31, 32) aufweist.

2. Flachglas (1, 10, 7, 70, 71, 72) gemäß dem vorstehenden Anspruch, wobei das Flachglas (1, 10, 7, 70, 71, 72) eine bimodale Nanostruktur aufweist, wobei bevorzugt die SiO₂-reiche Phase (2, 20, 21) eine Matrix ausbildet, in der B₂O₃-reiche Phasen (3, 30, 31) verteilt sind.

3. Flachglas (1, 10, 7, 70, 71, 72) gemäß dem vorstehenden Anspruch, wobei die B₂O₃-reichen Phasen (3, 30, 31, 32) eine maximale Querschnittslänge dₘₐₓ von höchstens 100 nm, bevorzugt höchstens 80 nm und/oder von zumindest 5 nm, bevorzugt zumindest 10 nm aufweisen.

4. Flachglas (1, 10, 7, 70, 71, 72) gemäß einem der vorstehenden Ansprüche, wobei das Flachglas Al₂O₃, bevorzugt mit einem Gehalt von 0,1 bis 2 Mol-% enthält.

5. Flachglas (1, 10, 7, 70, 71, 72) gemäß einem der vorstehenden Ansprüche, wobei der Gehalt des Flachglases an B₂O₃ zwischen 15 Mol-% und 30 Mol-%, insbesondere vorzugsweise zwischen 18 Mol-% und 25 Mol-% beträgt.

6. Flachglas (1, 10, 7, 70, 71, 72) gemäß einem der vorstehenden Ansprüche, wobei der Gehalt an Alkalimetalloxiden im Bereich von 1 bis 4 Mol-%, bevorzugt im Bereich von 1 bis 3,5 Mol-% liegt, der Gehalt an Na₂O im Glas im Bereich von 0,5 bis 2 Mol-%, bevorzugt 0,8 bis 1,5 Mol-% liegt und/oder das Flachglas (1, 10, 7, 70, 71, 72) Na₂O und Li₂O enthält, wobei bevorzugt das molare Verhältnis von Na₂O zu Li₂O im Bereich von 1,2 bis 3,8 liegt.

7. Flachglas (1, 10, 7, 70, 71, 72) gemäß einem der vorstehenden Ansprüche, wobei der Gehalt an Erdalkalimetalloxiden im Flachglas (1, 10, 7, 70, 71, 72) kleiner 1 Mol-%, bevorzugt kleiner 0,5 Mol-% ist und das Flachglas besonders bevorzugt frei von Erdalkalimetalloxiden ist.

8. Flachglas (1, 10, 7, 70, 71, 72) gemäß einem der vorstehenden Ansprüche, wobei das Flachglas (1) die folgenden Komponenten umfasst:
| | |
|---|---|
| SiO₂ | 65 Mol-% bis 85 Mol-%, bevorzugt 72 Mol-% bis 80 Mol-% |
| B₂O₃ | 15 Mol-% bis 30 Mol-%, bevorzugt 20 Mol-% bis 25 Mol-% |
| Al₂O₃ | 0,2 Mol-% bis 2 Mol-% |
| Na₂O | 0,5 Mol-% bis 2,0 Mol-%, bevorzugt 0,8 bis 1,5 Mol-% |
| K₂O | 0 Mol-% bis 1 Mol-%, bevorzugt 0,8 bis 1,5 Mol-% |
| Li₂O | 0,2 Mol-% bis 1,5 Mol-% |
wobei vorzugsweise die Summe der vom Flachglas (1, 10, 7, 70, 71, 72) umfassten Alkalimetalloxide Na₂O, K₂O, Li₂O, vorzugsweise die Summe aller vom Flachglas (1, 10, 7, 70, 71, 72) umfassten Alkalimetalloxide, weniger als 4 Mol-% beträgt.

9. Flachglas (1, 10, 7, 70, 71, 72) gemäß einem der vorstehenden Ansprüche, wobei das Flachglas (1) eine Dielektrizitätskonstante ε von kleiner 4,3 und einen dielektrischen Verlustfaktor tan δ von 2*10⁻⁴ oder weniger bei 10 GHz aufweist.

10. Flachglas (1, 10, 7, 70, 71, 72) gemäß einem der vorstehenden Ansprüche, wobei das Flachglas (1) einen elastischen Anteil von 62 bis 65% und einen E-Modul von kleiner als 60 GPa, bevorzugt kleiner 55 GPa aufweist.

11. Flachglas (1, 10, 7, 70, 71, 72) gemäß einem der vorstehenden Ansprüche, wobei das Flachglas (1, 10, 7, 70, 71, 72) zumindest einen strukturierten Bereich (13, 14), vorzugsweise einen mittels Laserstrukturierung eingebrachten strukturierten Bereich (13) aufweist.

12. Flachglas (7, 70, 71, 72) gemäß einem der vorstehenden Ansprüche, wobei das Flachglas (7, 70, 71, 72) geätzte Oberflächen (80, 90), oberflächennahe Bereiche (11) und einen Bulkbereich (12) umfasst, wobei das Flachglas (7, 70, 71, 72) in den oberflächennahen Bereichen (11) einen geringeren B₂O₃-Gehalt aufweist als im Bulkbereich (12). und wobei die geätzten Oberflächen (80, 90) bevorzugt eine arithmetische mittlere höhe Sa > 100 nm, einen quadratischen Höhenmittelwert Sq > 80 nm und/oder eine maximale Höhe Sz > 100 nm aufweisen.

13. Flachglas (7, 70, 71, 72) gemäß einem der beiden vorstehenden Ansprüche, umfassend zumindest einen strukturierten Bereich (14) mit geätzten Wandungen (140), wobei der strukturierte Bereich (14) bevorzugt als Kanal ausgebildet ist und sich der Kanal im Flachglas (7, 70, 71, 72) von einer Oberfläche (80) zur gegenüberliegenden Oberfläche (90) erstreckt.

14. Flachglas (71, 72) gemäß dem vorstehenden Anspruch, wobei das Flachglas (71, 72) zumindest im strukturierten Bereich (14) eine metallische Beschichtung (16) aufweist, wobei die metallische Beschichtung (16) bevorzugt eine kupferhaltige Beschichtung, besonders bevorzugt eine durch chemische Metallabscheidung abgeschiedene kupferhaltige Beschichtung ist.

15. Verfahren zur Herstellung eines strukturierten Flachglases (71, 72) mit einer metallischen Beschichtung (16) umfassend zumindest die folgenden Schritte:
a) Bereitstellen eines Flachglases (1) gemäß einem der Ansprüche 1 bis 10
b) Einbringen zumindest eines strukturierten Bereichs (13) in das in Schritt a) bereitgestellte Flachglas (1) durch Einstahlung eines Lasers, bevorzugt durch Einstrahlung eines UKP-Lasers,
c) Ätzen des in Schritt b) erhaltenen Flachglases (10) , wobei ein Flachglas (7, 70) erhalten wird, das in den oberflächennahen Bereichen (11) einen geringeren B₂O₃-Gehalt aufweist als im Bulkbereich (12) und wobei der strukturierte Bereich (14) bevorzugt einen Kanal (14) mit geätzten Wandungen (140) umfasst,
d) Abscheiden einer metallischen Beschichtung (16), vorzugweise einer Kupferbeschichtung, zumindest im strukturierten Bereich (14) des in Schritt c) erhaltenen Flachglases (7, 70), ,
wobei das Ätzen bevorzugt in einem wässrigen, basichen Ätzmedium mit einer Ätzrate von zumindest 3 µm/h, insbesondere zumindest 5 µm/h erfolgt.

16. Verwendung eines Flachglases (1, 10, 7, 70, 71, 72) gemäß einem der vorstehenden Ansprüche 1 bis 13 zur Herstellung eines elektronischen Bauteils, insbesondere zur Herstellung eines TGV-Interposers oder als Substrat für antenna in package Anwendungen oder als Substrat für automotive Anwendungen.
